## Europäisches Patentamt

## European Patent Office

## Office européen des brevets

(19)

(11) **EP 1 268 207 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(21) Anmeldenummer: 01923560.5

(22) Anmeldetag: **07.02.2001**

(51) Int Cl.⁷: **B32B 27/36**, C08K 5/00

(86) Internationale Anmeldenummer:
**PCT/EP2001/001304**

(87) Internationale Veröffentlichungsnummer:
**WO 2001/060609 (23.08.2001 Gazette 2001/34)**

(54) **WEISSE, SIEGELFÄHIGE, FLAMMHEMMEND AUSGERÜSTETE, BIAXIAL ORIENTIERTE POLYESTERFOLIE, VERFAHREN ZU IHRER HERSTELLUNG UND IHRE VERWENDUNG**

WHITE, SEALABLE BIAXIALLY ORIENTED POLYESTER FILM WHICH IS RENDERED FLAME RESISTANT, METHOD FOR THE PRODUCTION THEREOF AND ITS USE

FILM BLANC EN POLYESTER, SCELLABLE, TRAITE IGNIFUGE, A ORIENTATION BIAXIALE, PROCEDE PERMETTANT DE LA PRODUIRE ET UTILISATION

(84) Benannte Vertragsstaaten:
**DE FR GB IT LU NL**

(30) Priorität: **19.02.2000  DE 10007728**

(43) Veröffentlichungstag der Anmeldung:
**02.01.2003   Patentblatt 2003/01**

(73) Patentinhaber: **Mitsubishi Polyester Film GmbH 65203 Wiesbaden (DE)**

(72) Erfinder:
- **MURSCHALL, Ursula 55283 Nierstein (DE)**
- **OBERLÄNDER, Klaus 65207 Wiesbaden (DE)**
- **CRASS, Günther 65232 Taunusstein (DE)**
- **KERN, Ulrich 55218 Ingelheim (DE)**
- **PEIFFER, Herbert 55126 Mainz (DE)**

(74) Vertreter: **Schweitzer, Klaus, Dr. et al Patentanwaltskanzlei Zounek, Industriepark Kalle-Albert, Gebäude H391 Rheingaustrasse 190-196 65174 Wiesbaden (DE)**

(56) Entgegenhaltungen:
| | |
|---|---|
| **EP-A- 0 515 096** | **EP-A- 0 947 982** |
| **WO-A-98/06575** | **DE-A- 19 827 845** |
| **GB-A- 2 344 596** | |

**Beschreibung**

Die Erfindung betrifft eine siegelfähige, flammhemmend ausgerüstete, koextrudierte biaxial orientierte Polyesterfolie mit mindestens einer siegelfähigen Deckschicht A, einer Basisschicht B und einer weiteren Deckschicht C. Die Erfindung umfasst weiterhin ein Verfahren zur Herstellung der Folie und ihre Verwendung.

Die Folien und daraus hergestellte Artikel eignen sich insbesondere für Anwendungen, wo ein Brandschutz bzw. eine Schwerentflammbarkeit gefordert ist.

Die Folie zeichnet sich durch ihr charakteristisches weißes Erscheinungsbild aus, wodurch sie für die genannten Anwendungen besonders attraktiv wird.

Siegelfähige, biaxial orientierte Polyesterfolien sind nach dem Stand der Technik bekannt. Ebenfalls bekannt sind siegelfähige, biaxial orientierte Polyesterfolien, die mit einem oder mit mehreren UV-Absorbern ausgerüstet sind. Diese nach dem Stand der Technik bekannten Folien zeichnen sich entweder durch ein gutes Siegelverhalten, eine gute Optik oder durch ein akzeptables Verarbeitungsverhalten aus.

In der GB-A 1 465 973 wird eine koextrudierte, zweischichtige Polyesterfolie beschrieben, deren eine Schicht aus isophthalsäurehaltigen und terephthalsäurehaltigen Copolyestern und deren andere Schicht aus Polyethylenterphthalat besteht. Über das Siegelverhalten der Folie finden sich in der Schrift keine verwertbaren Angaben. Wegen fehlender

Pigmentierung ist die Folie nicht prozesssicher herstellbar (Folie ist nicht wickelbar) und nur unter Einschränkung weiterverarbeitbar.

In der **EP-A 0 035 835** wird eine koextrudierte siegelfähige Polyesterfolie beschrieben, der zur Verbesserung des Wickel- und des Verarbeitungsverhaltens in der Siegelschicht Partikel beigesetzt werden, deren mittlere Teilchengröße die Schichtdicke der Siegelschicht übersteigt. Durch die teilchenförmigen Zusatzstoffe werden Oberflächenvorsprünge gebildet, die das unerwünschte Blocken und Kleben an Walzen oder Führungen verhindern. Über die andere, nicht siegelfähige Schicht der Folie, werden keine näheren Angaben zur Einarbeitung von Antiblockmitteln gemacht. Es bleibt offen, ob diese Schicht Antiblockmittel enthält. Durch Wahl von Partikeln mit größerem Durchmesser als die Siegelschicht und den in den Beispielen angegebenen Konzentrationen wird das Siegelverhalten der Folie verschlechtert. Angaben zum Siegeltemperaturbereich der Folie werden in der Schrift nicht gemacht. Die Siegelnahtfestigkeit wird bei 140 °C gemessen und liegt in einem Bereich von 63 bis 120 N/m (0,97 N/15 mm bis 1,8 N/15 mm Folienbreite).

In der **EP-A 0 432 886** wird eine koextrudierte mehrschichtige Polyesterfolie beschrieben, die eine erste Oberfläche besitzt, auf der eine siegelfähige Schicht angeordnet ist und eine zweite Oberfläche besitzt, auf der eine Acrylatschicht angeordnet ist. Die siegelfähige Deckschicht kann auch hier aus isophthalsäurehaltigen und terephthalsäurehaltigen Copolyestern bestehen. Durch die rückseitige Beschichtung erhält die Folie ein verbessertes Verarbeitungsverhalten. Angaben zum Siegelbereich der Folie werden in der Schrift nicht gemacht. Die Siegelnahtfestigkeit wird bei 140 °C gemessen. Für eine 11 μm dicke Siegelschicht wird eine Siegelnahtfestigkeit von 761,5 N/m (11,4 N/ 15 mm) angegeben. Nachteilig an der rückseitigen Acrylatbeschichtung ist, daß diese Seite gegen die siegelfähige Deckschicht nicht mehr siegelt. Die Folie ist damit nur sehr eingeschränkt zu verwenden.

Die älteren Anmeldungen WO-A-01/53093, WO-A-01/53085, WO-A-01/53092 und WO-A-01/53080 beschrieben amorphe oder biaxial verstreckte flammhemmend ausgerüstete Polyesterfolien. aus einer Basisschicht und einer oder zwei Deckschichten, die ein- oder beidseitig auf die Basisschicht auflaminiert ist/sind. So ist in der WO-A-01/53093 eine derartige amorphe, transparente, siegelfähige, flammhemmend ausgerüstete Polyesterfolie offenbart, die UV-Stabilisatoren enthält.

In der WO-A-01/53085 ist eine hochtransparente, UV-Strahlung absorbierende Polyesterfolie beschrieben, die mit einer Heißsiegelschicht kaschiert ist, die auf die mit einem Polyurethankleber beschichtete Polyesterfolie auflaminiert ist. Die Basisschicht der Folie ist beidseitig jeweils mit der gleichen Deckschicht kaschiert.

Die aus der WO-A-01/53092 bekannte Polyesterfolie ist amorph, gegen UV-Strahlung stabilisiert und flammhemmend ausgerüstet.

In der WO-A01/53080 ist eine amorphe, einseitig matte, siegelfähige, gegen UV-Strahlung stabilisierte Polyesterfolie beschrieben.

Aus der älteren GB-A 2344596 ist eine zweischichtige Polyesterfolie mit einer Deckschicht A bekannt, über deren Topographie, soweit die mittlere Rauhigkeit und die Oberflächengasströmungszeit betroffen sind, keine Aussagen gemacht werden.

In der EP-A 0 515 096 wird eine koextrudierte, mehrschichtige siegelfähige Polyesterfolie beschrieben, die auf der siegelfähigen Schicht ein zusätzliches Additiv enthält. Das Additiv kann z.B. anorganische Partikel enthalten und wird vorzugsweise in einer wässrigen Schicht an die Folie bei deren Herstellung herangetragen. Hierdurch soll die Folie die guten Siegeleigenschaften beibehalten und gut zu verarbeiten sein. Die Rückseite enthält nur sehr wenige Partikel, die hauptsächlich über das Regranulat in diese Schicht gelangen. Angaben zum Siegeltemperaturbereich der Folie werden auch in dieser Schrift nicht gemacht. Die Siegelnahtfestigkeit wird bei 140 °C gemessen und beträgt mehr als 200 N/m (3 N/15 mm). Für eine 3 μm dicke Siegelschicht wird eine Siegelnahtfestigkeit von 275 N/m (4,125 N/15 mm) angegeben.

In der **WO 98/06575** wird eine koextrudierte mehrschichtige Polyesterfolie beschrieben, die eine siegelfähige Deckschicht und eine nicht siegelfähige Basisschicht enthält. Die Basisschicht kann dabei aus einer oder mehreren Schichten aufgebaut sein, wobei die innere der Schichten mit der siegelfähigen Schicht in Kontakt ist. Die andere (äußere) Schicht bildet dann die zweite nicht siegelfähige Deckschicht. Die siegelfähige Deckschicht kann auch hier aus isophthalsäurehaltigen und terephthalsäurehaltigen Copolyestem bestehen, die jedoch keine Antiblockteilchen enthalten. Die Folie enthält außerdem noch mindestens einen UV-Absorber, der der Basisschicht in einem Gewichtsverhältnis von 0,1 bis 10 % zugegeben wird. Als UV Absorber werden dabei vorzugsweise Triazine, z.B. ®Tinuvin 1577 der Fa. Ciba Geigy (Basel, Schweiz) verwendet. Die Basisschicht ist mit üblichen Antiblockmitteln ausgestattet. Die Folie zeichnet sich durch eine gute Siegelfähigkeit aus, hat jedoch nicht das gewünschte Verarbeitungsverhalten und weist zudem Defizite in den optischen Eigenschaften auf. Die Folie kann zudem eine matte Oberfläche aufweisen, sie besitzt dann aber eine hohe Trübung, die unerwünscht ist.

In der **DE-A 2346 787** ist ein schwerentflammbarer Rohstoff beschrieben. Neben dem Rohstoff ist auch die Verwendung des Rohstoffs zu Folien und Fasern beansprucht. Bei der Herstellung von Folie mit diesem beanspruchten phospholanmodifizierten Rohstoff zeigten sich folgende Defizite:

- Der genannte Rohstoff ist hydrolyseempfindlich und muss sehr gut vorgetrocknet werden. Beim Trocknen des Rohstoffes mit Trocknern, die dem Stand der Technik entsprechen, verklebt der Rohstoff, so dass nur unter schwierigsten Bedingungen eine Folie herstellbar ist.
- Die unter unwirtschaftlichen Bedingungen hergestellten Folien verspröden bei Temperaturbelastungen, d.h. die mechanischen Eigenschaften gehen aufgrund der Versprödung stark zurück, so dass die Folie unbrauchbar ist. Bereits nach 48 Stundne Temperaturbelastung tritt diese Versprödung auf.

Eine flammhemmende Wirkung bedeutet, dass die Folie in einer sogenannten Brandschutzprüfung die Bedingungen nach DIN 4102 Teil 2 und insbesondere die Bedingungen nach DIN 4102 Teil 1 erfüllt und in die Baustoffklassen B2 und insbesondere B1 der schwer entflammbaren Stoffe eingeordnet werden kann.

Desweiteren soll die Folie den UL-Test 94 "Vertical Burning Test for Flammablity of Plastic Material" bestehen, so dass sie in die Klasse 94 VTM-0 eingestuft werden kann. Das bedeutet, dass die Folie 10 Sekunden nach Wegnahme des Bunsenbrenners nicht mehr brennt, nach 30 Sekunden kein Glühen beobachtet wird und auch kein Abtropfen festgestellt wird.

Zu den erwünschten mechanischen Eigenschaften zählt unter anderem ein hoher E-Modul ($E_{MD} > 3200$ N/$mm^2$; $E_{TD} > 3500$ N/$mm^2$) sowie gute Reißfestigkeitswerte (in MD > 100 N/$mm^2$; in TD > 130 N/$mm^2$).

Eine wirtschaftliche Herstellung setzt voraus, dass die Rohstoffe bzw. die Rohstoffkomponenten, die zur Herstellung der schwer entflammbaren Folie benötigt werden, mit handelsüblichen Industrietrocknern, wie z. B. Vakuumtrockner, Wirbelschichttrockner, Fließbetttrockner und Festbetttrockner (Schachttrockner) getrocknet werden.

Wesentlich ist, dass die Rohstoffe nicht verkleben und nicht thermisch abgebaut werden.

Keine Versprödungen bei kurzer Temperaturbelastung bedeutet, dass die Folie nach 100 Stunden Tempervorgang bei 100 °C in einem Umluftofen keine Versprödung und keine verschlechterten mechanischen Eigenschaften aufweisen darf.

Aufgabe der vorliegenden Erfindung ist es, eine siegelfähige, flammhemmend ausgerüstete und biaxial orientierte Polyesterfolie bereitzustellen, die die Nachteile der genannten Folien nach dem Stand der Technik nicht aufweist und sich insbesondere durch eine sehr gute Siegelfähigkeit, eine wirtschaftliche Herstellung, eine verbesserte Verarbeitbarkeit und verbesserte optische Eigenschaften auszeichnet. Vor allem soll sie eine flammhemmende Wirkung und keine Versprödung nach Temperaturbelastung aufweisen.

Im Rahmen dieser Ausgabe soll der Siegelbereich der Folie auf niedrige Temperaturen erweitert, die Siegelnahtfestigkeit der Folie erhöht und gleichzeitig für ein verbessertes Handling der Folie gesorgt werden, als es nach dem Stand der Technik bekannt ist. Außerdem soll gewährleistet sein, dass die Folie auch auf schnelllaufenden Verarbeitungsmaschinen verarbeitet werden kann. Bei der Herstellung der Folie soll immanent anfallendes Regenerat in einer Konzentration bis zu 60 Gew.-%, bezogen auf das Gesamtgewicht der Folie, der Extrusion zugeführt werden können, ohne dass dabei die physikalischen Eigenschaften der Folie nennenswert negativ beeinflusst werden.

Die Aufgabe wird erfindungsgemäß durch die Bereitstellung eine weißen, siegelfähigen, flammhemmend ausgerüsteten, biaxial orientierten Polyesterfolie mit mindestens einer Basisschicht B, einer siegelfähigen Deckschicht A und einer weiteren Deckschicht C gelöst, wobei die siegelfähige Deckschicht A 40 bis 95 Mol-% Ethlyenterephthalat und 60 bis 5 Mol-% Ethylen-isophthalat enthält, eine mittlere Rauhigkeit $R_a$ kleiner 30 nm und eine Oberflächengasströmungszeit von 500 bis 4000 s aufweist, die nicht siegelfähige Deckschicht C einen Reibungskoeffizienten COF kleiner 0,5 und eine mittlere Rauhigkeit von 40 bis 100 nm hat, die Deckschicht C und gegebenenfalls die siegelfähige Deckschicht A und/oder die Basisschicht B ein Flammschutzmittel enthalten und der Basisschicht B Weißpigmente hinzugefügt sind.

Die nicht siegelfähige Deckschicht C weist bevorzugt einen Messwertbereich für die Gasströmung von kleiner 120 s, einen Glanz von kleiner 100 (Messwinkel 20°) und eine Anzahl von Erhebungen N pro $mm^2$ Folienoberfläche auf, die mit der jeweiligen Höhe h über folgende Gleichungen korreliert sind:

$$A_{C1} - B_{C1} * \log h/\mu m < N_C/mm2 < A_{C2} - B_{C2} * \log h/\mu m$$

$$0,01 \; \mu m < h < 10 \; \mu m$$
$$A_{C1} = 0,29 \; B_{C1} = 3,30$$
$$B_{C2} = 1,84; \; B_{C2} = 2,70$$

Die Polyesterfolie hat bevorzugt einen Weißgrad von größer 70 und eine planare Orientierung von kleiner 0,1685 und erfüllt die Normen der Baustoffklassen B2 und B1 nach DIN 4101 Teil 2/Teil 1 und besteht den UL-Test 94.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate sowie die Halogenverbindungen aufgrund der entstehenden halogenhaltigen Nebenprodukte nachteilig sind. Des weiteren ist die geringe Lichtbeständigkeit einer damit ausgerüsteten Folie neben der Entwicklung von Halogenwasserstoffen im Brandfall extrem nachteilig.

Geeignete Flammschutzmittel, die gemäß der Erfindung eingesetzt werden, sind beispielsweise organische Phosphorverbindungen wie Carboxyphosphinsäuren, deren Anhydride und Dimethyl-methylphosphonat. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali/Erdalkalistearate und/ oder Alkali-/Erdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythrityl-Tetrakis-3-(3,5-di-Tertiärbutyl-4-Hydroxyphenyl)-Priopionat oder 1,3,5-Trimethyl-2,4,6-tris(3,5-di-Tertärbutyl-4-Hydroxybenzyl)benzol sind besonders vorteilhaft.

Die Basisschicht B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$ Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die durch Koextrusion auf die Basisschicht B aufgebrachte siegelfähige Deckschicht A ist auf Basis von Polyestercopolymeren aufgebaut und besteht im wesentlichen aus Copolyestern, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Siegeleigenschaften bereitstellen, sind solche, die aus Ethylenterephthalat- und Ethylenisophthalat-Einheiten und aus Ethylenglykol-Einheiten aufgebaut sind. Der Anteil an Ethylenterephthalat beträgt 40 bis 95 Mol-% und der entsprechende Anteil an Ethylenisophthalat 60 bis 5 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

Für die andere, nicht siegelfähige Deckschicht C oder für eventuell vorhandene Zwischenschichten können prinzipiell die gleichen Polymere verwendetwerden, wie zuvor für die Basisschicht B beschrieben wurde.

Die gewünschten Siegel- und die gewünschten Verarbeitungseigenschaften der erfindungsgemäßen Folie werden aus der Kombination der Eigenschaften des verwendeten Copolyesters für die siegelfähige Deckschicht und den Topographien der siegelfähigen Deckschicht A und der nicht siegelfähigen Deckschicht C erhalten.

Die Siegelanspringtemperatur von ≤ 110 °C und der Siegelnahtfestigkeit von ≥ 1,3 N/15mm wird erreicht, wenn für die siegelfähige Deckschicht A die oben näher beschriebene Copolymere verwendet werden. Die besten Siegeleigenschaften der Folie erhält man, wenn dem Copolymeren keine weiteren Additive, insbesondere keine anorganische oder organische Filler zugegeben werden. Für diesen Fall erhält man bei vorgegebenem Copolyester die niedrigste Siegelanspringtemperatur und die höchsten Siegelnahtfestigkeiten. Allerdings ist in diesem Fall das Handling der Folie schlecht, da die Oberfläche der siegelfähigen Deckschicht A stark zum Verblocken neigt. Die Folie lässt sich kaum wickeln und ist für eine Weiterverarbeitung auf schneillaufenden Verpackungsmaschinen nicht geeignet. Zur Verbesserung des Handlings der Folie und der Verarbeitbarkeit ist es notwendig, die siegelfähige Deckschicht A zu modifizieren. Dies geschieht am besten mit Hilfe von geeigneten Antiblockmitteln einer ausgewählten Größe, die in einer bestimmten Konzentration der Siegelschicht zugegeben werden und zwar derart, daß einerseits das Verblokken minimiert und andererseits die Siegeleigenschaften nur unwesentlich verschlechtert werden. Diese gewünschte Eigenschaftskombination lässt sich erreichen, wenn die Topographie der siegelfähigen Deckschicht A bevorzugt durch den folgenden Satz von Parametern gekennzeichnet ist:

- Die Rauhigkeit der siegelfähigen Deckschicht, gekennzeichnet durch den $R_a$-Wert, sollte kleiner als 30 nm sein. Im anderen Fall werden die Siegeleigenschaften im Sinne der vorliegenden Erfindung negativ beeinflusst.
- Der Messwert der Gasströmung sollte im Bereich von 500-4000 s liegen. Bei Werten unterhalb von 500 s werden die Siegeleigenschaften im Sinne der vorliegenden Erfindung negativ beeinflusst und bei Werten oberhalb von 4000 s wird das Handling der Folie schlecht.

Um das Verarbeitungsverhalten der siegelfähigen Folie weiterhin zu verbessern, sollte die Topographie der nicht siegelfähigen Deckschicht C bevorzugt durch den folgenden Satz von Parametern gekennzeichnet sein:

- Der Reibungskoeffizient (COF) dieser Seite gegen sich selbst sollte kleiner als 0,5 sein. Andernfalls ist das Wickelverhalten und die Weiterverarbeitung der Folie unbefriedigend.
- Die Rauhigkeit der nicht siegelfähigen Deckschicht, gekennzeichnet durch den $R_a$-Wert, sollte ≥ 40 nm und ≤ 100 nm sein. Kleinere Werte als 40 nm haben negative Auswirkungen auf das Wickel- und Verarbeitungsverhalten der Folie und größere Werte als 100 nm beeinträchtigen die optischen Eigenschaften (Glanz) der Folie.
- Der Messwert der Gasströmung sollte im Bereich unterhalb von 120 s liegen. Bei Werten ab 120 s wird das Wickel- und das Verarbeitungsverhalten der Folie negativ beeinflusst.
- Die Anzahl der Erhebungen N pro mm² Folienoberfläche ist m it der jeweiligen Höhe h über die folgende Gleichung korreliert:

$$0,29 - 3,30 * \log h/\mu m < \log N/mm^2 < 1,84 - 2,70 * \log h/\mu m$$

$$0,01\ \mu m < h < 10\ \mu m$$

Sind die Werte für N kleiner als der linken Seite der Gleichung entspricht, so wird das Wickel- und das Verarbeitungsverhalten der Folie negativ beeinflusst, sind die Werte für N größer als es der rechten Seite der Gleichung entspricht, so wird der Glanz der Folie negativ beeinflusst.

In der dreischichtigen Ausführungsform ist das Flammschutzmittel vorzugsweise in der nicht siegelfähigen Deckschicht C enthalten. Jedoch kann nach Bedarf auch die Basisschicht B oder auch die siegelfähige Deckschicht A mit Flammschutzmittein ausgerüstet sein. Die Konzentration des oder der Flammschutzmittels(n) bezieht sich dabei auf das Gewicht der Thermoplasten in der mit Flammschutzmitteln ausgerüsteten Schicht.

Ganz überraschend haben Brandschutzversuche nach DIN 4102 und dem UL-Test gezeigt, daß es im Falle einer dreischichtigen Folie durchaus ausreichend ist, die 0,3 bis 2,5 µm dicke(n) Deckschicht(en) mit Flammschutzmittel auszurüsten, um eineverbesserte Flammhemmung zu erreichen. Bei Bedarf und bei hohen Brandschutzanforderungen kann auch die Kemschicht mit Flammschutzmittel ausgerüstet sein, d.h. eine sogenannte Grundausrüstung beinhalten.

Dadurch werden die mit der bekannten Koextrusionstechnologie hergestellten schwer entflammbaren, mehrschichtigen Folien im Vergleich zu den komplett in hohen Konzentrationen ausgerüsteten Monofolien wirtschaftlich interessant, da deutlich weniger Flammschutzmittel benötigt wird.

Erfindungsgemäß wird das Flammschutzmittel über die Masterbatch-Technologie zugegeben. Das Flammschutzmittel wird in einem Trägermaterial voll dispergiert. Als Trägermaterial kommen das Polyethylenterephthalat oder auch andere Polymere, die mit dem Polyethylenterephthalat verträglich sind, in Frage.

Wichtig bei der Masterbatch-Technologie ist, daß die Komgröße und das Schüttgewicht des Masterbatches ähnlich der Korngröße und dem Schüttgewicht des Thermoplasten ist, so daß eine homogene Verteilung und damit eine homogene Schwerentflammbarkeit erfolgen kann.

Erfindungswesentlich ist, daß das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck ( 20 bis 80 mbar, vorzugsweise 30 bis 60 mbar, insbesondere 40 bis 50 mbar ) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160 °C, vorzugsweise 20 °C bis 150 °C, insbesondere 30 °C bis 130 °C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90 bis 180 °C, vorzugsweise 100 °C bis 170 °C, insbesondere 110 °C bis 160 °C für 2 bis 8 Stunden, vorzugsweise 3 bis 7 Stunden, insbesondere 4 bis 6 Stunden nachgetrocknet.

Die Basisschicht B kann zusätzlich übliche Additive, wie beispielsweise Stabilisatoren und/oder Antiblockmittel enthalten. Die beiden anderen Schichten A und C enthalten ebenfalls zusätzlich übliche Additive, wie beispielsweise Stabilisatoren und/oder Antibtockmittel. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Antiblockmittel können auch Mischungen von zwei und mehreren verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. als glykolische Dispersion während der Polykondensation oder über Masterbatche bei der Extrusion zugegeben werden.

Bevorzugte Partikel sind $SiO_2$ in kolloidaler und in kettenartiger Form. Diese Partikel werden sehr gut in die Polymermatrix eingebunden und erzeugen nur geringfügig Vakuolen. Die Partikeldurchmesser der eingesetzten Teilchen sind prinzipiell nicht eingeschränkt. Für die Lösung der Aufgabe hat es sich jedoch als zweckmäßig erwiesen, Teilchen mit einem mittleren Primärpartikeldurchmesser von kleiner als 100 nm, bevorzugt kleiner als 60 nm und besonders bevorzugt kleiner als 50 nm und/oder Teilchen mit einem mittleren Primärpartikeldurchmesser von größer als 1 µm, bevorzugt größer als 1,5 µm und besonders bevorzugt größer als 2 µm zu verwenden. Diese zuletzt beschriebenen Teilchen sollten jedoch keinen mittleren Partikeldurchmesser aufweisen, der größer ist als 5 µm.

Zur Erzielung der vorgenannten Eigenschaften, insbesondere des gewünschten Weißgrades der Folie, enthält die Basisschicht die dazu notwendige Pigmentierung. Geeignete Weißpigmente sind vorzugsweise Titandioxid, Bariumsulfat, Calciumcarbonat, Kaolin, Siliciumdioxid, wobei Titandioxid und Bariumsulfat bevorzugt sind. Hierbei hat es sich als besonders günstig erwiesen, Bariumsulfat in einer Komgröße von 0,3-0,8 µm, vorzugsweise 0,4-0,7 µm auszuwählen. Die Folie erhält hierdurch ein brillantes weißes Aussehen, ohne gelbstichig zu sein.

Das Weißpigment wird ebenfalls bevorzugt über die Masterbatch-Technologie zudosiert, kann aber auch direkt beim Rohstoffhersteller eingearbeitet werden. Die Konzentration des Weißpigments liegt zwischen 12 Gew.-% und 40 Gew.-%, vorzugsweise zwischen 14 Gew.-% und 35 Gew.-%, besonders bevorzugt zwischen 16 Gew.-% und 25 Gew.-% bezogen auf das Gewicht der Schicht des verwendeten Polyesters.

In der vorteilhaften Verwendungsform besteht die Folie aus drei Schichten, der Basisschicht B und beidseitig auf dieser Basisschicht aufgebrachten Deckschichten A und C, wobei die Deckschicht A gegen sich selbst und gegen die Deckschicht C siegelfähig ist.

Zur Erzielung des genannten Eigenschaftsprofils der Folie weist die Deckschicht C mehr Pigmente (d.h. höhere Pigmentkonzentration) als die Deckschicht A auf. Die Pigmentkonzentration in dieser zweiten Deckschicht C liegt zwischen 0,1 und 1,0 %, vorteilhaft zwischen 0,12 und 0,8 % und insbesondere zwischen 0,15 und 0,6 %. Die andere, der Deckschicht C gegenüberliegenden, siegelfähige Deckschicht A ist dagegen weniger mit inerten Pigmenten gefüllt. Die Konzentration der inerten Partikeln in der Schicht A liegt zwischen 0,01 und 0,2 Gew.-%, vorzugsweise zwischen 0,015 und 0,15 Gew.-% und insbesondere zwischen 0,02 und 0,1 Gew.-%.

Zwischen der Basisschicht und den Deckschichten kann sich gegebenenfalls jeweils noch eine Zwischenschicht befinden. Diese kann wiederum aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 μm und liegt vorzugsweise im Bereich von 0,5 bis 15 μm, insbesondere im Bereich von 1,0 bis 10 μm und ganz besonders bevorzugt im Bereich von 1,0 bis 5 μm.

Bei der besonders vorteilhaften dreischichtigen Ausführungsform der erfindungsgemäßen Folie ist die Dicke der Deckschichten A und C im allgemeinen größer als 0,1 μm und liegt allgemein im Bereich von 0,2 bis 4,0 μm, vorteilhaft im Bereich von 0,2 bis 3,5 μm, insbesondere im Bereich von 0,3 bis 3 μm und ganz besonders bevorzugt im Bereich von 0,3 bis 2,5 μm, wobei die Deckschichten A und C gleich oder verschieden dick sein können.

Die Gesamtdicke der erfindungsgemäßen Polyesterfolie kann variieren. Sie beträgt 5 bis 350 μm, insbesondere 5 bis 300 μm, vorzugsweise 5 bis 250 μm, wobei die Schicht B einen Anteil von vorzugsweise 5 bis 90 % an der Gesamtdicke hat.

Die Erfindung betrifft weiterhin ein Verfahren zur Herstellung der erfindungsgemäßen Polyesterfolie nach dem an sich bekannten Koextrusionsverfahren.

Die Polymere für die Basisschicht B und die beiden Deckschichten A und C werden drei Extrudern zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die Folie wird anschließend biaxial gestreckt (orientiert), thermofixiert und gegebenenfalls an der zur Behandlung vorgesehenen Oberflächenschicht corona- oder flammbehandelt.

Die biaxiale Verstreckung wird im allgemeinen sequentiell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche(n) der Folie nach den bekannten Verfahren in-line beschichten. Die In-Line-Beschichtung kann beispielsweise zu einer verbesserten Haftung der Metallschicht oder einer eventuell aufgebrachten Druckfarbe, aber auch zur Verbesserung des antistatischen Verhaltens oder des Verarbeitungsverhaltens dienen.

Für die Herstellung einer Folie mit sehr guten Siegeleigenschaften hat es sich als günstig erwiesen, wenn die planare Orientierung p der Folie kleiner ist als $\Delta p = 0{,}165$, besonders aber kleiner ist als $\Delta p = 0{,}163$. In diesem Fall ist die Festigkeit der Folie in Dickenrichtung so groß, daß bei der Messung der Siegelnahtfestigkeit definitiv die Siegelnaht aufgetrennt wird und die Folie nicht einreißt und weiterreißt.

Es hat sich herausgestellt, daß die wesentlichen Einflussgrößen auf die planare Orientierung $\Delta p$ die Verfahrensparameter in der Längsstreckung und in der Querstreckung sind, sowie der SV-Wert (standard viscosity) des verwendeten Rohstoffes. Zu den Verfahrensparametem gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine. Erhält man beispielsweise mit einer Maschine eine planare Orientierung von $\Delta p = 0{,}167$ mit dem Parametersatz $\lambda_{MD} = 4{,}8$ und $\lambda_{TD}$

= 4,0 , die Strecktemperaturen in Längs- und in Querrichtung $T_{MD}$ = 80 - 118 °C und $T_{TD}$ = 80 - 125 °C, so erhält man durch Erhöhung der Längsstrecktemperatur auf $T_{MD}$ = 80 - 125 °C oder durch Erhöhung der Querstrecktemperatur auf $T_{TD}$ = 80 - 135 °C oder durch Absenkung des Längsstreckverhältnisses auf $\lambda_{MD}$ = 4,3 oder durch Absenkung des Querstreckverhältnisses auf $\lambda_{TD}$ = 3,7 eine planare Orientierung $\Delta p$, die im gewünschten Bereich liegt. Die Folienbahngeschwindigkeit betrug hierbei 340 m/min und der SV-Wert (standard viscosity) des Materials etwa 730. Die genannten Daten beziehen sich bei der Längsstreckung auf die sogenannte N-TEP Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter leicht verschieden sein. Die angegebenen Temperaturen beziehen sich bei der Längsstreckung auf die jeweiligen Walzentemperaturen und bei der Querstreckung auf die Folientemperaturen, die mittels Infrarot gemessen wurden.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von über 45 mN/m.

Zur Einstellung weiterer gewünschter Eigenschaften kann die Folie zusätzlich beschichtet werden. Typische Beschichtungen sind haftvermittelnde, antistatisch, schlupfverbessernd oder dehäsiv wirkende Schichten. Es bietet sich an, diese zusätzliche Schichten über inline coating mittels wässriger Dispersionen vor dem Streckschritt in Querrichtung auf die Folie aufzubringen.

Die erfindungsgemäße Folie zeichnet sich durch eine hervorragende Siegelfähigkeit, eine schwere Entflammbarkeit, ein sehr gutes Handling und durch ein sehr gutes Verarbeitungsverhalten aus. Bei der Folie siegelt die siegelfähige Deckschicht A nicht nur gegen sich selbst (fin sealing), sondern auch gegen die nicht siegelfähige Deckschicht C (lap sealing). Bei der lap sealing ist die Siegelanspringtemperatur lediglich um ca. 10 K nach oben verschoben und die Siegelnahtfestigkeit ist um nicht mehr als 0,3 N/15 mm verschlechtert.

Bei der Herstellung der Folie wurde festgestellt, daß sich mittels Masterbatch-Technologie, einer geeigneten Vortrocknung bzw. Vorkristallisation des Masterbatches und durch Einsatz von geringen Konzentrationen an Hydrolysestabilisator die schwer entflammbare Folie ohne Verklebung im Trockner herstellen lässt. Des Weiteren wurden keine Ausgasungen und Ablagerungen im Produktionsprozess gefunden.

Darüber hinaus ergaben Messungen, daß die erfindungsgemäße Folie bei Temperaturbelastungen von 100 °C über einen längeren Zeitraum nicht versprödet, was mehr als überraschend ist. Dieses Resultat ist auf die synergistische Wirkung von geeigneter Vorkristallisation, Vortrocknung, Masterbatch-Technologie und Hydrolysestabilisator zurückzuführen.

Desweiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder, beim Messebau und für andere Werbeartikel, wo Brandschutz gewünscht wird, eignet.

Überraschenderweise erfüllen schon erfindungsgemäße Folien im Dickenbereich 5 - 350 µm die Baustoffklassen B2 und B1 nach DIN 4102 und dem UL-Test 94.

Außerdem besticht die Folie durch einen hervorragenden Weißgrad von >70 (nach Berger), der der Folie zusätzlich ein sehr attraktives, werbewirksames Aussehen verleiht.

Bei der Herstellung der Folie ist gewährleistet, daß das Regenerat in einer Konzentration von 20 bis 60 Gew.-%, bezogen auf das Gesamtgewicht der Folie, wieder der Extrusion zugeführt werden kann, ohne daß dabei die physikalischen Eigenschaften der Folie nennenswert negativ beeinflusst werden.

Die Folie eignet sich auf Grund ihrer hervorragenden Siegeleigenschaften, auf Grund ihres sehr guten Handlings und auf Grund ihrer sehr guten Verarbeitungeigenschaften insbesondere für die Verarbeitung auf schnellaufenden Maschinen.

Darüber hinaus eignet sich die Folie auf Grund ihrer hervorragender Eigenschaftskombinationen für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, als Kaschiermedium, für Gewächshäuser, Überdachungen, Außenverkleidungen, Abdeckungen von Materialien, wie z.B. Stahlblechen, Anwendungen im Bausektor und Lichtwerbeprofile, Schattenmatten, Elektroanwendungen.

Die nachstehende Tabelle (Tabelle 1) fasst die wichtigsten erfindungsgemäßen Folieneigenschaften noch einmal zusammen.)

Zur Charakterisierung der Rohstoffe und der Folien wurden die folgenden Messwerte benutzt:

## Tabelle 1

| | Erfindungsgemäßer Bereich | bevorzugt | besonders bevorzugt | Einheit | Messmethode |
|---|---|---|---|---|---|
| **Deckschicht A** | | | | | |
| Siegelanspringtemperatur | < 110 | < 105 | < 100 | °C | intern |
| Siegelnahtfestigkeit | > 1,3 | > 1,5 | > 1,8 | N/15 mm | intern |
| Mittlere Rauhigkeit $R_a$ | < 30 | < 25 | < 20 | nm | DIN 4768, Cut-off von 0,25 mm |
| Meßwertbereich für die Gasströmung | 500-4000 | 800-3500 | 1000-3000 | sec | intern |
| Glanz, 20° | > 120 | > 130 | > 140 | | DIN 67 530 |
| **Deckschicht C** | | | | | |
| COF | < 0,5 | < 0,45 | < 0,40 | | DIN 53 375 |
| Mittlere Rauhigkeit $R_a$ | 40-100 | 45-95 | 50-90 | nm | DIN 4768, Cut-off von 0,25 mm |
| Messwertbereich für die Gasströmung | < 120 | < 100 | < 80 | sec | intern |
| Glanz, 20° | > 140 | > 150 | > 160 | | DIN 67 530 |
| **weitere Folieneigenschaften** | | | | | |
| Weißgrad | > 70 | > 75 | > 80 | | Berger |
| Planare Orientierung | < 0,165 | < 0,163 | < 0,160 | | intern |
| Brandverhalten | Die Folie erfüllt nach DIN 4102 Tei2/Teil1 die Baustoffklassen B2 und B1und besteht den UL-Test 94 | | | | |

**Meßmethoden**

**SV (DCE), IV (DVE)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV \text{ (DCE)} = 6{,}67 \cdot 10^{-4} SV \cdot (DCE) + 0{,}118$$

**Siegelanspringtemperatur (Mindestsiegeltemperatur)**

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wird. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Siegelanspringtemperatur ist die Temperatur, bei der eine Siegelnahtfestigkeit von mindestens 0,5 N/15 mm erreicht wird.

**Siegelnahtfestigkeit**

Zur Bestimmung der Siegelnahtfestigkeit wurden zwei 15 mm breite Folienstreifen übereinandergelegt und bei 130 °C, einer Siegelzeit von 0,5 s und einem Siegeldruck von 2 bar (Gerät: Brugger Typ NDS, einseitig beheizte Siegelbacke) versiegelt. Die Siegelnahtfestigkeit wurde nach der T-Peel-Methode bestimmt.

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels dersogenannten Tintenmethode (DIN 53 364) bestimmt.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Korngrößen auf Folienoberflächen**

Die Bestimmung der Größenverteilung von Erhebungen auf Folienoberflächen erfolgt mit einem Rasterelektronenmikroskop und einem Bildanalysesystem. Verwendet wird das Rasterelektronenmikroskop XL30 CP der Fa. Philips mit einem integrierten Bildanalyseprogramm AnalySIS der Fa. Soft-Imaging System.

Für diese Messungen werden Folienproben flach auf einen Probenhalter aufgebracht. Anschließend werden diese unter einem Winkel a mit einer dünnen Metallschicht (z. B. aus Silber) schräg bedampft. Dabei ist a der Winkel zwischen Probenoberfläche und der Ausbreitungsrichtung des Metalldampfes. Durch diese Schrägbedampfung entsteht hinter der Erhebung ein Schattenwurf. Da die Schatten noch nicht elektrisch leitfähig sind, wird die Probe anschließend noch mit einem zweiten Metall (z.B. Gold) bedampft oder gesputtert, wobei die zweite Beschichtung senkrecht auf die Probenoberfläche auftrifft und somit bei der zweiten Beschichtung keine Schatten entstehen.

Die so präparierten Probenoberflächen werden in einem Rasterelektronenmikroskop (REM) abgebildet. Die Schatten der Erhebungen sind infolge des Materialkontrastes der Metalle sichtbar. Die Probe wird im REM so orientiert, daß die Schatten parallel zu einem Bildrand verlaufen. Für die Bildaufnahme werden folgende Bedingungen am REM eingestellt: Sekundärelektronendetektor, Arbeitsabstand 10 mm, Beschleunigungsspannung 10 kV und Spot 4,5. Die Helligkeit und Kontrast werden so eingestellt, daß sämtliche Bildinformationen als Grauwerte dargestellt werden und die Intensität des Grundrauschens so klein ist, daß er nicht als Schatten detektiert wird. Die Länge der Schatten wird mit dem Bildanalyse ausgemessen. Der Schwellwert für die Schattenerkennung wird auf die Stelle gelegt, wo die 2. Ableitung der Grauwertverteilung des Bildes den Nullpunkt durchquert. Vor der Schattenerkennung wird das Bild mit einem NxN-Filter (Größe 3, 1 Iteration) geglättet. Durch die Setzung eines Rahmens ("frame") wird sichergestellt, daß Erhebungen, die im Bild nicht vollständig abgebildet werden, nicht mitgemessen werden. Die Vergrößerung, die Rahmengröße und die Anzahl der ausgewerteten Bildern werden so gewählt, daß insgesamt 0,36 mm$^2$ Folienoberfläche ausgewertet werden.

Die Höhe der einzelnen Erhebungen wird aus den einzelnen Schattenlängen mit folgender Beziehung errechnet:

$$h = (\tan a) * L$$

wobei h die Höhe der Erhebung, a der Bedampfungswinkel und L die Schattenlänge ist. Die so ermittelten Erhebungen werden in Klassen eingeteilt um zu einer Häufigkeitsverteilung zu kommen. Die Einteilung erfolgt in 0,05 mm breite Klassen zwischen 0 und 1 mm, wobei die kleinste Klasse (0 bis 0,05 mm) für weitere Auswertungen nicht verwendet wird. Die Durchmesser (Ausbreitung senkrecht zur Schattenwurfsrichtung) der Erhebungen werden in ähnlicher Weise in 0,2 mm breiten Klassen von 0 bis 10 mm eingestuft, wobei auch hier die kleinste Klasse für die weitere Auswertung verwendet wird.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.

Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezeptienten einen Druckanstieg von 56 mbar zu bewirken. Messbedingungen:

| | |
|---|---|
| Messfläche | 45,1 cm$^2$ |
| Anpressgewicht | 1276 g |
| Lufttemperatur | 23 °C |
| Luftfeuchte | 50 % relative Feuchte |
| Gassammelvolumen | 1,2 cm$^3$ |
| Druckintervall | 56 mbar |

**Planare Orientierung $\Delta$p**

Die Bestimmung der planaren Orientierung erfolgt über die Messung der Brechungsindizes mit dem Abbe-Refraktometer nach folgendem Verfahren:

Probengröße und Probenlänge: 60 bis 100 mm
Probenbreite: entspricht Prismenbreite von 10 mm

Zur Bestimmung von $n_{MD}$ und $n_a$ (=$n_z$) muss die zu messende Probe aus der Folie ausgeschnitten werden, bei der die Laufkante der Probe exakt mit der TD-Richtung übereinstimmen muss. Zur Bestimmung von $n_{TD}$ und $n_a$ (=$n_z$) muss die zu messende Probe aus der Folie ausgeschnitten werden, bei der die Laufkante der Probe exakt mit der MD-Richtung übereinstimmen muss. Die Proben sind aus der Mitte der Folienbahn zu entnehmen. Es ist dafür Sorge zu tragen, daß das Abbe-Refraktometer eine Temperatur von 23 °C hat. Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muss größer als 1,685 sein. Darauf wird zuerst die in TD-Richtung ausgeschnittene Probe aufgelegt, so daß die gesamte Prismenoberfläche bedeckt ist. Mit Hilfe eines Papiertaschentuches wird nun die Folie fest auf das Prisma aufgebügelt, so daß die Folie fest und glatt aufliegt. Die überflüssige Flüssigkeit muss abgesaugt werden. Danach wird ein wenig von der Messflüssigkeit auf die Folie getropft. Das zweite Prisma wird heruntergeklappt und fest angedrückt. Nun wird mit Hilfe der rechten Rändelschraube die Anzeigeskala so weit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, daß nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Messskala angezeigte Wert wird abgelesen und in das Messprotokoll eingetragen. Dies ist der Brechungsindex in Maschinenrichtung $n_{MD}$. Nun wird die Skala mit der unteren Rändelschraube so weit verdreht, daß der im Okular sichtbare Bereich zwischen 1,49 und 1,50 zu sehen ist.

Jetzt wird der Brechungsindex in $n_a$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so daß ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.

Anschließend wird die Probe gedreht und die entsprechenden Brechungsindizes $n_{MD}$ und $n_a$ (=$n_z$) der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_\alpha$ (= $n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

### Oberflächendefekte

Die Oberflächendefekte werden visuell bestimmt.

### Mechanische Eigenschaften

Der E-Modul, die Reißfestigkeit und die Reißdehnung werden in Längs- und Querrichtung nach ISO 527-1-2 gemessen.

### Brandverhalten

Das Brandverhalten wird nach DIN 4102 Teil 2, Baustoffklasse B2 und nach DIN 4102 Teil 1, Baustoffklasse B1 sowie nach dem UL-Test 94 ermittelt.

### Beispiele

### Beispiel 1

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und dem Extruder für die Basisschicht B zugeführt. Ebenfalls wurden Chips aus Polyethylenterephthalat und einem Füllstoff dem Extruder für die nicht siegelfähige Deckschicht C zugeführt.

Daneben wurden Chips aus einem linearen Polyester hergestellt, der aus einem amorphen Copolyester mit 78 Mol.-% Ethylenterephthalat und 22 Mol-% Ethylenisophthalat besteht (hergestellt über das Umesterungsverfahren mit Mn als Umesterungskatalysator, Mn-Konzentration: 100 ppm). Der Copolyester wurde bei einer Temperatur von 100 °C auf eine Restfeuchte von unterhalb 200 ppm getrocknet und dem Extruder für die siegelfähige Deckschicht A zugeführt.

Als Weißpigment wurde Bariumsulfat eingesetzt.

Der Hydrolysestabilisator und das Flammschutzmittel werden in Form eines Masterbatches zudosiert. Das Masterbatch setzt sich aus 20 Gew.-% Flammschutzmittel, 1 Gew.-% Hydrolysestabilisator und 79 Gew.-% Polyethylenterephthalat zusammen. Bei dem Hydrolysestabilisator handelt es sich um Pentaerylthrityl-Tetrakis-3-(3,5-di-Tertiärbutyl-4-Hydroxylphenyl)-Propionat. Bei dem Flammschutzmittel handelt es sich um Dimethylphosphonat (® Armgard P 1045). Das Masterbatch hat ein Schüttgewicht von 750 kg/m$^3$ und einen Erweichungspunkt von 69 °C.

Das Masterbatch wurde bei Raumtemperatur aus separaten Dosierbehältem in einem Vakuumtrockner gefüllt, der von dem Einfüllzeitpunkt bis zum Ende der Verweilzeit ein Temperaturspektrum von 25 °C bis 130 °C durchläuft. Während der ca. 4-stündigen Verweilzeit wird das Masterbatch mit 61 Upm gerührt. Das vorkristallisierte bzw. vorgetrocknete Masterbatch wird in dem nachgeschalteten, ebenfalls unter Vakuum stehenden Hopper bei 140 °C 4 Stunden nachgetrocknet.

Der Basisschicht B werden 10 Gew.-% des Masterbatches und der nicht siegelfähigen Deckschicht C 20 Gew.-% des Masterbatches zugegeben.

Es wurde durch Koextrusion und anschließende stufenweise Orientierung in Längs- und Querrichtung eine weiße dreischichtige Folie mit ABC-Aufbau und einer Gesamtdicke von 20 µm hergestellt. Die Dicke der jeweiligen Deckschichten ist der Tabelle 2 zu entnehmen.

Deckschicht A, Mischung aus:

| 97,0 Gew.-% | Copolyester mit einem SV-Wert von 800 |
|---|---|
| 3,0 Gew.-% | Masterbatch aus 97,75 Gew.-% Copolyester (SV-Wert von 800) und 1,0 Gew.-% ®Sylobloc 44 H (synthetisches SiO$_2$ der Fa. Grace) und 1,25 Gew.-% ®Aerosil TT 600 (pyrogenes SiO$_2$ der Fa. Degussa) |

Basisschicht B:

| 70,0 Gew.-% | Polyethylenterephthalat mit einem SV-Wert von 800 |
|---|---|
| 20,0 Gew.-% | Bariumsulfat einer mittleren Komgröße von 0,5 µm |
| 10,0 Gew.-% | Masterbatch, welches Flammschutzmittel und Hydrolysestabilisator enthält |

Deckschicht C, Mischung aus:

| 20 Gew.-% | Masterbatch, welches Flammschutzmittel und Hydrolysestabilisator enthält |
|---|---|
| 68 Gew.-% | Polyethylenterephthalat mit einem SV-Wert von 800 |
| 12 Gew.-% | Masterbatch aus 97,75 Gew.-% Copolyester (SV-Wert von 800) und 1,0 Gew.-% ®Sylobloc 44 H (synthetisches SiO$_2$ der Fa. Grace) und 1,25 Gew.-% ®Aerosil TT 600 (kettenartiges SiO$_2$ der Fa. Degussa). |

Die Herstellungsbedingungen in den einzelnen Verfahrensschritten waren:

| Längsstreckung | Temperatur: | 80 - 125°C |
|---|---|---|
| | Längsstreckverhältnis: | 4,2 |
| Querstreckung | Temperatur: | 80 - 135 °C |
| | Querstreckverhältnis: | 4,0 |
| Fixierung | Temperatur: | 230 °C |
| Dauer | | 3 s |

Die Folie hatte die geforderten guten Siegeleigenschaften, den gewünschten Weißgrad und zeigt das gewünschte Handling und das gewünschte Verarbeitungsverhalten. Der Folienaufbau und die erzielten Eigenschaften derart hergestellter Folien sind in den Tabellen 2 und 3 (Folienaufbau und Ergebnisse) dargestellt.

Nach 200 Stunden Tempern bei 100 °C im Umlufttrocknerschrank sind die mechanischen Eigenschaften unverändert. Die Folie zeigt keinerlei Versprödungserscheinungen. Die Folie erfüllt nach DIN 4102 Teil 2 und Teil 1 die Baustoffklassen B2 und B1. Die Folie besteht den UL-Test 94.

**Beispiel 2**

Im Vergleich zu Beispiel 1 wurde die Deckschichtdicke der siegelfähigen Schicht A von 1,5 auf 2,0 µm angehoben. Die Siegeleigenschaften haben sich hierdurch verbessert, insbesondere ist die Siegelnahtfestigkeit deutlich größer geworden (siehe Tabellen 2 und 3).

**Beispiel 3**

Im Vergleich zu Beispiel 1 wurde jetzt eine 30 µm dicke Folie produziert. Die Deckschichtdicke der siegelfähigen Schicht A betrug 2,5 µm und diejenige der nicht siegelfähigen Schicht B betrug 2,0 µm. Die Siegeleigenschaften haben sich hierdurch nochmals verbessert, insbesondere ist die Siegelnahtfestigkeit deutlich größer geworden. Das Handling der Folie hat sich dabei tendenziell verbessert (siehe Tabellen 2 und 3).

**Beispiel 4**

Im Vergleich zu Beispiel 3 wurde das Copolymere für die siegelfähige Deckschicht A geändert. Anstelle des amorphen Copolyesters mit 78 Mol.-% Polyethylenterephthalat und 22 Mol-% Ethylenterephthalat wurde jetzt ein amorpher Copolyester mit 70 Mol.-% Polyethylenterephthalat und 30 Mol-% Ethylenterephthalat verwendet. Der Rohstoff wurde auf einem Zweischneckenextruder mit Entgasung verarbeitet, ohne daß er vorgetrocknet werden musste. Die Deckschichtdicke der siegelfähigen Schicht A betrug wiederum 2,5 µm und diejenige der nicht siegelfähigen Schicht B betrug 2,0 µm. Die Siegeleigenschaften haben sich hierdurch verbessert, insbesondere ist die Siegelnahtfestigkeit deutlich größer geworden. Zur Erzielung eines guten Handlings und eines guten Verarbeitungsverhalten der Folie wurde die Pigmentkonzentration in den beiden Deckschichten leicht angehoben (siehe Tabellen 2 und 3).

**Vergleichsbeispiel 1**

Im Vergleich zu Beispiel 1 wurde jetzt die siegelfähige Deckschicht A nicht pigmentiert. Die Siegeleigenschaften haben sich zwar hierdurch etwas verbessert, jedoch ist das Handling der Folie und das Verarbeitungsverhalten inakzeptabel schlechter geworden (siehe Tabellen 2 und 3).

**Vergleichsbeispiel 2**

Im Vergleich zu Beispiel 1 wurde jetzt die siegelfähige Deckschicht A so hoch pigmentiert wie die nicht siegelfähige Deckschicht C. Das Handling und die Verarbeitungseigenschaften der Folie haben sich durch diese Maßnahme verbessert, jedoch sind die Siegeleigenschaften deutlich schlechter geworden (siehe Tabellen 2 und 3).

**Vergleichsbeispiel 3**

Im Vergleich zu Beispiel 1 wurde jetzt die nicht siegelfähige Deckschicht A deutlich weniger pigmentiert. Das Handling der Folie und das Verarbeitungsverhalten der Folie ist deutlich schlechter geworden (siehe Tabellen 2 und 3).

**Vergleichsbeispiel 4**

Es wurde Beispiel 1 aus der **EP-A 0 035 835** nachgearbeitet. Das Siegelverhalten der Folie, das Handling der Folie und das Verarbeitungsverhalten der Folie ist schlechter als bei den erfindungsgemäßen Beispielen (siehe Tabellen 2 und 3).

## Tabelle 2

| Bei-spiel | Folien-dicke µm | Folien-aufbau | Schichtdicken µm | | | Pigmente in den Schichten | | | mittlerer Pigment-Durchmesser in Schichten µm | | | Pigmentkonzentrationen ppm | | |
|---|---|---|---|---|---|---|---|---|---|---|---|---|---|---|
| | | | A | B | C | A | B | C | A | B | C | A | B | C |
| B 1 | 20 | ABC | 1,5 | 17 | 1,5 | Sylobloc 44 H / Aerosil TT 600 | kein | Sylobloc 44 H / Aerosil TT 600 | 2,5 / 0,04 | | 2,5 / 0,04 | 300 / 375 | 0 | 1200 / 1500 |
| B 2 | 20 | ABC | 2,0 | 16,5 | 1,5 | Sylobloc 44 H / Aerosil TT 600 | kein | Sylobloc 44 H / Aerosil TT 600 | 2,5 / 0,04 | | 2,5 / 0,04 | 300 / 375 | 0 | 1200 / 1500 |
| B 3 | 30 | ABC | 2,5 | 25,5 | 2,0 | Sylobloc 44 H / Aerosil TT 600 | kein | Sylobloc 44 H / Aerosil TT 600 | 2,5 / 0,04 | | 2,5 / 0,04 | 300 / 375 | 0 | 1200 / 1500 |
| B 4 | 30 | ABC | 2,5 | 25,5 | 2,0 | Sylobloc 44 H / Aerosil TT 600 | kein | Sylobloc 44 H / Aerosil TT 600 | 2,5 / 0,04 | | 2,5 / 0,04 | 400 / 500 | 0 | 1500 / 1875 |
| VB 1 | 20 | ABC | 1,5 | 17 | 1,5 | kein | kein | Sylobloc 44 H / Aerosil TT 600 | | | 2,5 / 0,04 | | 0 | 1200 / 1500 |
| VB 2 | 20 | ABC | 1,5 | 17 | 1,5 | Sylobloc 44 H / Aerosil TT 600 | kein | Sylobloc 44 H / Aerosil TT 600 | 2,5 / 0,04 | | 2,5 / 0,04 | 300 / 375 | 0 | 1200 / 1500 |
| VB 3 | 20 | ABC | 1,5 | 17 | 1,5 | Sylobloc 44 H / Aerosil TT 600 | kein | Sylobloc 44 H / Aerosil TT 600 | 2,5 / 0,04 | | 2,5 / 0,04 | 300 / 375 | 0 | 600 / 750 |
| VB 4 | 15 | AB | 2,25 | 12,75 | | Gasil 35 / EP-A-035 835 | kein | | 3 | | | 2500 | 0 | |

EP 1 268 207 B1

## Tabelle 3

| Bei-spiel | Siegel-anspring-temperatur °C A-Seite gegen A-Seite | Siegel-naht-festigkeit N/15mm A-Seite gegen A-Seite | Reibung COF C-Seite gegen C-Seite | Mittlere Rauhigkeit $R_a$ nm | | Meßwerte für die Gasströmung sec | | Konstanten A/B | | Δp | Glanz 20° | | Wickel-verhalten und Handling | Verar-beitungs-verhalten |
|---|---|---|---|---|---|---|---|---|---|---|---|---|---|---|
| | | | | A-Seite | C-Seite | A-Seite | C-Seite | A-Seite | C-Seite | | A-Seite | C-Seite | | |
| B 1 | 100 | 2,0 | 0,45 | 25 | 65 | 1200 | 80 | 0,5 | 3,06 | 0,165 | 140 | 170 | ++ | ++ |
| B 2 | 98 | 2,7 | 0,45 | 26 | 65 | 1280 | 80 | 0,5 | 3,06 | 0,165 | 140 | 170 | ++ | ++ |
| B 3 | 95 | 3,0 | 0,41 | 23 | 61 | 1110 | 80 | 0,5 | 3,06 | 0,165 | 130 | 170 | ++ | ++ |
| B 4 | 85 | 3,3 | 0,40 | 23 | 65 | 1300 | 60 | 0,5 | 3,06 | 0,165 | 130 | 170 | ++ | ++ |
| VB 1 | 98 | 2,1 | 0,45 | 10 | 65 | 10000 | 80 | | | 0,165 | 160 | 170 | - | - |
| VB 2 | 110 | 1,0 | 0,45 | 65 | 65 | 80 | 80 | | | 0,165 | 130 | 170 | - | - |
| VB 3 | 100 | 2,0 | 0,45 | 25 | 37 | 1200 | 150 | | | 0,165 | 160 | 190 | - | - |
| VB 4 | 115 | 0,97 | >2 | 70 | 20 | 50 | >5000 | | | | | | - | - |

Zeichenerklärung beim Wickelverhalten, Handling und beim Verarbeitungsverhalten der Folien:

++: keine Klebeneigung an Walzen oder anderen mechanischen Teilen, keine Blockprobleme beim Wickeln und bei der Verarbeitung auf Verpackungsmaschinen, niedrige Herstellkosten

Klebeneigung an Walzen oder anderen mechanischen Teilen, Blockprobleme beim Wickeln und bei der Verarbeitung auf Verpackungsmaschinen, hohe Herstellkosten durch aufwendiges Handling der Folie in den Maschinen

**EP 1 268 207 B1**

**Patentansprüche**

1. Siegelfähige, flammhemmend ausgerüstete, biaxial orientierte Polyesterfolie mit mindestens einer siegelfähigen Deckschicht A, einer Basisschicht B und einer weiteren Deckschicht C, **dadurch gekennzeichnet, dass** die siegelfähige Deckschicht A 40 bis 95 Mol-% Ethlyenterephthalat und 60 bis 5 Mol-% Ethylenisophthalat enthält, eine mittlere Rauhigkeit $R_a$ kleiner 30 nm und eine Oberflächengasströmungszeit von 500 bis 4000 s aufweist, dass die nicht siegelfähige Deckschicht C einen Reibungskoeffizienten COF kleiner 0,5 und eine mittlere Rauhigkeit von 40 bis 100 nm hat, dass die Deckschicht C und gegebenenfalls die siegelfähige Deckschicht A und/oder die Basisschicht B ein Flammschutzmittel enthalten und dass der Basisschicht B Weißpigmente hinzugefügt sind.

2. Polyesterfolie nach Anspruch 1, **dadurch gekennzeichnet, dass** die Siegelanspringtemperatur der siegelfähigen Deckschicht A kleiner/gleich 110 °C und ihre Siegelnahtfestigkeit größer/gleich 1,3 N/15 mm sind.

3. Polyesterfolie gemäß Anspruch 1 oder 2, **dadurch gekennzeichnet, dass** die siegelfähige Deckschicht A einen Glanz von größer 120 (Messwinkel 20°) aufweist.

4. Polyesterfolie gemäß einem der Ansprüche 1 bis 3, **dadurch gekennzeichnet, dass** die nicht siegelfähige Deckschicht C einen Messwertbereich für die Gasströmung von kleiner 120 s aufweist.

5. Polyesterfolie gemäß einem der Ansprüche 1 bis 4, **dadurch gekennzeichnet, dass** die nicht siegelfähige Deckschicht C einen Glanz von kleiner 100 (Messwinkel 20°) aufweist.

6. Polyesterfolie gemäß einem der Ansprüche 1 bis 5, **dadurch gekennzeichnet, dass** die Polyesterfolie einen Weißgrad von größer 70 aufweist.

7. Polyesterfolie gemäß einem der Ansprüche 1 bis 6, **dadurch gekennzeichnet, dass** die Polyesterfolie eine planare Orientierung von kleiner 0,165 hat.

8. Polyesterfolie gemäß einem der Ansprüche 1 bis 7, **dadurch gekennzeichnet, dass** die Polyesterfolie die Normen der Baustoffklassen B2 und B1 nach DIN 4101 Teil 2/Teil 1 erfüllt und den UL-Test 94 besteht.

9. Polyesterfolie gemäß einem der Ansprüche 1 bis 8, **dadurch gekennzeichnet, dass** die Basisschicht B bis zu 90 Gew.-% aus einem thermoplastischen Polyester aus der Reihe PET, PEN, PCDT und PENBB besteht und der restliche Gewichtsanteil Monomereinheiten von aliphatischen, cycloaliphatischen oder aromatischen Diolen bzw. Dicarbonsäuren enthält.

10. Polyesterfolie gemäß einem der Ansprüche 1 bis 9, **dadurch gekennzeichnet, dass** die Basisschicht B bis zu 95 Gew.-% aus einem thermoplastischen Polyester aus der Reihe PET und PEN besteht.

11. Polyesterfolie gemäß einem der Ansprüche 1 bis 10, wobei die siegelfähige Deckschicht A auf Basis von Polyestercopolymeren aufgebaut ist und aus Ethylenterephthalat-Einheiten (40 bis 95 Mol-%), Ethylenisophthalat-Einheiten (60 bis 5 Mol-%) und Monomereinheiten von aliphatischen, cycloaliphatischen oder aromatischen Diolen bzw. Dicarbonsäuren besteht.

12. Polyesterfolie gemäß einem der Ansprüche 1 bis 11, **dadurch gekennzeichnet, dass** die siegelfähige Deckschicht A 0,2 µm bis 4,0 µm dick ist.

13. Polyesterfolie gemäß einem der Ansprüche 1 bis 12, **dadurch gekennzeichnet, dass** die nicht siegelfähige Deckschicht C bis zu 95 Gew.-% aus einem thermoplastischen Polyester aus der Reihe PET, PEN, PCDT und PENBB besteht.

14. Polyesterfolie gemäß einem der Ansprüche 1 bis 13, **dadurch gekennzeichnet dass** die nicht siegelfähige Deckschicht C 0,2 µm bis 4,0 µm dick ist.

15. Polyesterfolie gemäß Anspruch 1, **dadurch gekennzeichnet, dass** das Flammschutzmittel ausschließlich in der nicht siegelfähigen Deckschicht C enthalten ist.

16. Polyesterfolie gemäß Anspruch 1 oder 15, **dadurch gekennzeichnet, dass** das Flammschutzmittel ausgewählt ist aus einer oder mehreren organischen Phosphorverbindungen, die in PET löslich ist/sind.

17. Polyesterfolie gemäß Anspruch 1 oder 16, **dadurch gekennzeichnet, dass** die Konzentration des Flammschutzmittels zwischen 0,5 und 30,0 Gew.-% beträgt, bezogen auf das Gewicht der Schicht in der das Flammschutzmittel eingesetzt ist.

18. Polyesterfolie gemäß Anspruch 1, **dadurch gekennzeichnet, dass** das Weißpigment ein oder mehrere Weißpigmente aus der Gruppe Titandioxid, Bariumsulfat, Calciumcarbonat, Kaolin und Siliciumdioxid umfasst.

19. Polyesterfolie nach Anspruch 18, **dadurch gekennzeichnet, dass** das Weißpigment Bariumsulfat ist.

20. Polyesterfolie gemäß Anspruch 18, **dadurch gekennzeichnet, dass** 12 bis 40 Gew.-% Weißpigment, bezogen auf das Gewicht der Schicht in welcher das Weißpigment enthalten ist, in der Folie vorhanden sind.

21. Polyesterfolie gemäß Anspruch 19, **dadurch gekennzeichnet, dass** das Weißpigment Bariumsulfat eine mittlere Korngröße von 0,3 bis 0,8 µm besitzt.

22. Polyesterfolie gemäß einem oder mehreren der Ansprüche 1 bis 21, **dadurch gekennzeichnet, dass** die Folie noch jeweils eine Zwischenschicht zwischen der Basisschicht B und den Deckschichten A und C aufweist.

23. Verfahren zur Herstellung einer Polyesterfolie nach Anspruch 1, **dadurch gekennzeichnet, dass** das Polymere bzw. die Polymermischung der einzelnen Schichten gegebenenfalls zusammen mit einem vorkristallisierten bzw. vorgetrockneten Masterbatch, das ein Flammschutzmittel, Weißpigmente und gegebenenfalls einen Hydrolysestabilisator enthält, in einem Extruder komprimiert und verflüssigt werden, die Schmelzen dann gleichzeitig durch eine Flachdüse (Breitschlitzdüse) gepresst werden, die ausgepresste mehrschichtige Folie auf einer oder mehreren Abzugswalzen abgezogen wird, die so erhaltene Vorfolie anschließend biaxial verstreckt und thermofixiert wird und gegebenenfalls an der zur Behandlung vorgesehenen Oberflächensicht corona- oder flammbehandelt wird.

24. Verfahren gemäß Anspruch 23, **dadurch gekennzeichnet, dass** das Flammschutzmittel in einem Trägermaterial des Masterbatches aus Polyethylenterephthalat oder einem mit Polyethylenterephthalat verträglichen Polymer voll dispergiert wird.

25. Verfahren gemäß Anspruch 23, **dadurch gekennzeichnet, dass** das Weißpigment über die Masterbatch-Technologie dem Polymer bzw. der Polymermischung einer Basisschicht B zudosiert wird.

26. Verwendung einer Folie gemäß den Ansprüchen 1 bis 22 als Innenraumverkleidung, für Messebau und Messeartikel, als Display, für Schilder, für Schutzverglasungen von Maschinen und Fahrzeugen, im Beleuchtungssektor, im Laden- und Regalbau, als Werbeartikel, als Kaschiermedium, für Gewächshäuser, Überdachungen, Außenverkleidungen, Abdeckungen von Materialien, im Bausektor, als Lichtwerbeprofil, Schattenmatten oder in Elektroanwendungen.

**Claims**

1. A sealable, flame-retardant, biaxially oriented polyester film with at least one sealable outer layer A, one base layer B, and one other outer layer C, wherein the sealable outer layer A comprises from 40 to 95 mol% of ethylene terephthalate and from 60 to 5 mol% of ethylene isophthalate, has an average roughness Ra smaller than 30 nm and has a surface gas flow time of from 500 to 4000 s, the non-sealable outer layer C has a coefficient of friction COF smaller than 0.5 and an average roughness of from 40 to 100 nm, the outer layer C, and, where appropriate, the scalable outer layer A and/or the base layer B, comprise a flame retardant, and white pigments have been added to the base layer B.

2. The polyester film as claimed in claim 1, wherein the sealable outer layer A has a minimum sealing temperature of ≤ 110°C and a seal seam strength of ≥ 1.3 N/15 mm.

3. The polyester film as claimed in claim 1 or 2, wherein the gloss of the sealable outer layer A is above 120 (angle of measurement 20°).

4.  The polyester film as claimed in one or more of claims 1 to 3, wherein the gas flow values measured for the nonsealable outer layer C are below 120 s.

5.  The polyester film as claimed in one or more of claims 1 to 4, wherein the gloss of the nonsealable outer layer C is below 100 (angle of measurement 20°).

6.  The polyester film as claimed in one or more of claims 1 to 5, wherein the whiteness of the polyester film is above 70.

7.  The polyester film as claimed in one or more of claims 1 to 6, wherein the planar orientation of the polyester film is below 0.165.

8.  The polyester film as claimed in one or more of claims 1 to 7, wherein the polyester film fulfills the requirements for construction material classes B2 and B1 to DIN 4101 Part 2/Part 1, and passes the UL 94 test.

9.  The polyester film as claimed in one or more of claims 1 to 8, wherein up to 90% by weight of the base layer B is composed of a thermoplastic polyester selected from the group consisting of PET, PEN, PCDT and PENBB, and the remaining proportion by weight comprises monomer units of aliphatic, cycloaliphatic or aromatic diols and, respectively, dicarboxylic acids.

10. The polyester film as claimed in one or more of claims 1 to 9, wherein up to 95% by weight of the base layer B is composed of a thermoplastic polyester selected from the group consisting of PET and PEN.

11. The polyester film as claimed in one or more of claims 1 to 10, wherein the structure of the sealable outer layer A has been based on polyester copolymers and is composed of ethylene terephthalate units (from 40 to 95 mol%), ethylene isophthalate units (from 60 to 5 mol%), and monomer units of aliphatic, cycloaliphatic or aromatic diols and, respectively, dicarboxylic acids.

12. The polyester film as claimed in one or more of claims 1 to 11, wherein the thickness of the sealable outer layer A is from 0.2 to 4.0 µm.

13. The polyester film as claimed in one or more of claims 1 to 12, wherein up to 95% by weight of the nonsealable outer layer C is composed of a thermoplastic polyester selected from the group consisting of PET, PEN, PCDT and PENBB.

14. The polyester film as claimed in one or more of claims 1 to 13, wherein the thickness of the nonsealable outer layer C is from 0.2 to 4.0 µm.

15. The polyester film as claimed in claim 1, wherein the flame retardant is present exclusively in the nonsealable outer layer C.

16. The polyester film as claimed in claim 1 or 15, wherein the flame retardant is selected from one or more organic phosphorus compounds soluble in PET.

17. The polyester film as claimed in claim 1 or 16, wherein the concentration of the flame retardant is from 0.5 to 30.0% by weight, based on the weight of the layer in which the flame retardant has been used.

18. The polyester film as claimed in claim 1, wherein the white pigment comprises one or more white pigments selected from the group consisting of titanium dioxide, barium sulfate, calcium carbonate, kaolin and silicon dioxide.

19. The polyester film as claimed in claim 18, wherein the white pigment is barium sulfate.

20. The polyester film as claimed in claim 18, wherein from 12 to 40% by weight of white pigment, based on the weight of the layer in which the white pigment is present, is present in the film.

21. The polyester film as claimed in claim 19, wherein the average particle size of the white pigment barium sulfate is from 0.3 to 0.8 µm.

22. The polyester film as claimed in one or more of claims 1 to 21, wherein the film also has an intermediate layer between the base layer B and each of the outer layers A and C.

23. A process for producing a polyester film as claimed in claim 1, which comprises compressing and plasticizing the polymer or the polymer mixture for the individual layers in an extruder, where appropriate together with a precrystallized or predried masterbatch in which a flame retardant, white pigments, and, where appropriate, a hydrolysis stabilizer are present, then simultaneously extruding the melts through a flat-film die (slot die), drawing off the extruded multilayer film on one or more take-off rolls, then biaxially stretching and heat-setting the resultant prefilm, and, if desired, corona- or flame-treating the surface layer intended for treatment.

24. The process as claimed in claim 23, wherein the flame retardant is completely dispersed in a carrier material of the masterbatch composed of polyethylene terephthalate or a polymer compatible with polyethylene terephthalate.

25. The process as claimed in claim 23, wherein the white pigment is fed by way of masterbatch technology into the polymer or, respectively, polymer mixture of a base layer B.

26. The use of a film as claimed in any of claims 1 to 22 as interior decoration, for constructing exhibition stands, for exhibition requisites, for displays, for placards, for protective glazing of machines or of vehicles, in the lighting sector, in the fitting out of shops or of stores, as a promotional requisite, as a laminating medium, for greenhouses, roofing systems, exterior cladding, protective coverings for materials, in the construction sector, as an illuminated advertising profile, as blinds or in electrical applications.

**Revendications**

1. Film polyester, orienté biaxialement, à retardateur de flamme, soudable comportant au moins une couche de couverture A soudable, une couche de base B et une couche de couverture C supplémentaire, **caractérisé en ce que** la couche de couverture A soudable contient 40 % à 95 % en moles d'éthylène térephthalate et 60 % à 5 % en moles d'éthylène isophthalate, qu'il présente une rugosité moyenne $R_a$ inférieure à 30 nm et un temps de flux gazeux surfacique de 500 à 4000 s, **en ce que** la couche de couverture C non soudable présente un coefficient de friction COF inférieur à 0,5 et une rugosité moyenne de 40 à 100 nm, **en ce que** la couche de couverture C et, le cas échéant, la couche de couverture A soudable et/ou la couche de base B contiennent un agent retardateur de flamme et **en ce que** la couche de base B est additionnée de pigments blancs.

2. Film polyester selon la revendication 1, **caractérisé en ce que** la température de début de soudabilité de la couche de couverture A soudable est inférieure/égale à 110°C et **en ce que** la résistance de la soudure est supérieure/ égale à 1,3 N/15 mm.

3. Film polyester selon la revendication 1 ou 2, **caractérisé en ce que** la couche de couverture A soudable présente une brillance supérieure à 120 (angle de mesure 20°).

4. Film polyester selon l'une des revendications 1 à 3, **caractérisé en ce que** la couche de couverture C non soudable présente un domaine de valeurs de mesure pour le flux gazeux inférieur à 120 s.

5. Film polyester selon l'une des revendications 1 à 4, **caractérisé en ce que** la couche de couverture C non soudable présente une brillance inférieure à 100 (angle de mesure 20°).

6. Film polyester selon l'une des revendications 1 à 5, **caractérisé en ce que** le film polyester présente un indice de blanc supérieur à 70.

7. Film polyester selon l'une des revendications 1 à 6, **caractérisé en ce que** le film polyester présente une orientation planaire inférieure à 0,165.

8. Film polyester selon l'une des revendications 1 à 7, **caractérisé en ce que** le film polyester répond aux exigences des normes des classes de matériaux de construction B2 et B1 selon DIN 4101 Partie 2/Partie 1 et remplit les exigences du test UL 94.

9. Film polyester selon l'une des revendications 1 à 8, **caractérisé en ce que** la couche de base B est composée jusqu'à 90 % en poids d'un polyester thermoplastique choisi dans le groupe consistant en PET, PEN, PCDT et PENBB, le reste contenant des unités monomères de diols ou d'acides dicarboxyliques, respectivement aliphatiques, cycloaliphatiques ou aromatiques.

10. Film polyester selon l'une des revendications 1 à 9, **caractérisé en ce que** la couche de base B est composée jusqu'à 95 % en poids d'un polyester thermoplastique choisi parmi le PET et le PEN.

11. Film polyester selon l'une des revendications 1 à 10, dans lequel la couche de couverture A soudable est composée de copolymères polyester et d'unités éthylène térephthalate (40 % à 95 % en moles), d'unités éthylène isophthalate (60 % à 5 % en moles) et d'unités monomères de diols ou d'acides carboxyliques, respectivement aliphatiques, cycloaliphatiques ou aromatiques.

12. Film polyester selon l'une des revendications 1 à 11, **caractérisé en ce que** la couche de couverture A soudable présente une épaisseur de 0,2 μm à 4,0 μm.

13. Film polyester selon l'une des revendications 1 à 12, **caractérisé en ce que** la couche de couverture C non soudable est composée jusqu'à 95 % en poids d'un polyester thermoplastique choisi dans le groupe consistant en PET, PEN, PCDT et PENBB.

14. Film polyester selon l'une des revendications 1 à 13, **caractérisé en ce que** la couche de couverture C non soudable présente une épaisseur de 0,2 μm à 4,0 μm.

15. Film polyester selon la revendication 1, **caractérisé en ce que** l'agent retardateur de flamme est contenu exclusivement dans la couche de couverture C non soudable.

16. Film polyester selon l'une des revendications 1 à 15, **caractérisé en ce que** l'agent retardateur de flamme est choisi parmi l'un ou plusieurs composé(s) organique(s) du phosphore, soluble(s) dans le PET.

17. Film polyester selon l'une des revendications 1 à 16, **caractérisé en ce que** la concentration en agent retardateur de flamme est comprise entre 0,5 % et 30,0 % en poids par rapport au poids de la couche dans laquelle l'agent retardateur de flamme est mis en oeuvre.

18. Film polyester selon la revendication 1, **caractérisé en ce que** le pigment blanc comprend un ou plusieurs pigments blancs choisi(s) dans le groupe du dioxyde de titane, sulfate de baryum, carbonate de calcium, kaolin et dioxyde de silicium.

19. Film polyester selon la revendication 18, **caractérisé en ce que** le pigment blanc est le sulfate de baryum.

20. Film polyester selon la revendication 18, **caractérisé en ce que** 12 % à 40 % en poids de pigment blanc par rapport au poids de la couche dans laquelle le pigment blanc est contenu sont présents dans le film.

21. Film polyester selon la revendication 19, **caractérisé en ce que** le pigment blanc sulfate de baryum présente un diamètre de particules moyen de 0,3 à 0,8 μm.

22. Film polyester selon l'une quelconque des revendications 1 à 21, **caractérisé en ce que** le film comporte en outre une couche intermédiaire entre la couche de base B et les couches de couverture A et C, respectivement.

23. Procédé de préparation d'un film polyester selon la revendication 1, **caractérisé en ce que** le polymère ou le mélange de polymères des couches respectives est comprimé et liquéfié dans une extrudeuse, le cas échéant avec un Masterbatch précristallisé et/ou préséché, lequel contient un agent retardateur de flamme, des pigments blancs et, le cas échéant, un stabilisant à l'hydrolyse, les matières en fusion étant ensuite extrudées à travers une buse plate (buse à fente large) de manière simultanée, le film multicouches extrudé étant bobiné sur un ou plusieurs rouleaux de bobinage, le préfilm ainsi obtenu étant ensuite étiré de manière biaxiale et thermofixé et, le cas échéant, soumis à un traitement Corona ou un traitement à la flamme sur la couche superficielle prévue pour un tel traitement.

24. Procédé selon la revendication 23, **caractérisé en ce que** l'agent retardateur de flamme est complètement dispersé dans un matériau support du Masterbatch de polyéthylène térephthalate ou d'un polymère compatible avec le polyéthylène térephthalate.

**25.** Procédé selon la revendication 23, **caractérisé en ce que** le pigment blanc est ajouté aux polymères ou au mélange de polymères de la couche de base B par dosage au moyen de la technologie Masterbatch.

**26.** Utilisation d'un film selon les revendications 1 à 22 à titre de revêtement d'intérieur, pour la construction et les articles de foire, à titre d'afficheur, pour des panneaux, pour des vitrages de protection de machines et de véhicules, dans le secteur de l'éclairage, dans la construction de magasins et d'étagères, à titre d'article de promotion, comme matière de contre-collage, pour des serres, des préaux, des revêtements extérieurs, des protections de matériaux, dans le domaine du bâtiment, à titre de profilé de publicités lumineuses, comme mâts d'ombrage ou dans des applications électriques.